# EUROPÄISCHE PATENTSCHRIFT

(11) **EP 1 036 930 B1**
(45) Veröffentlichungstag und Bekanntmachung des Hinweises auf die Patenterteilung: **22.09.2004**
(21) Anmeldenummer: 99105570.8
(22) Anmeldetag: 18.03.1999
(51) Int. Cl.: F02M 31/125, F02M 37/22

(54) **Heizeinrichtung für Dieselkraftstoff und beheiztes Dieselfiltersystem**
Heating device for diesel fuel and heated diesel fuel filter system
Dispositif de chauffage pour gazole et système de filtrage de gazole chauffé

(43) Veröffentlichungstag der Anmeldung: 20.09.2000
(73) Patentinhaber: David + Baader DBK Spezialfabrik Elektrischer Apparate und Heizwiderstände GmbH, 76870 Kandel/Pfalz (DE)
(72) Erfinder: Bohlender, Franz, 76870 Kandel (DE)
(74) Vertreter: Grünecker, Kinkeldey, Stockmair & Schwanhäusser Anwaltssozietät

(56) Entgegenhaltungen:
- EP-A- 0 057 172
- EP-A- 0 581 176
- DE-A- 2 114 401
- DE-A- 2 316 054
- DE-A- 4 309 099
- DE-U- 8 531 912
- FR-A- 619 882
- FR-A- 2 634 090
- GB-A- 2 084 437
- US-A- 3 235 084
- US-A- 3 737 621
- US-A- 4 539 108

## Beschreibung

Die Erfindung bezieht sich auf eine Heizeinrichtung für Dieselkraftstoff, die ein PTC-Heizelement und einen hierzu in thermischem Kontakt stehenden Wärmeleitkörper umfaßt. Ferner bezieht sich die Erfindung auf ein Dieselfiltersystem, das eine erfindungsgemäße Heizeinrichtung für Dieselkraftstoff enthält.

Moderne Dieselmotoren verfügen über eine hochentwickelte Einspritzmechanik, die eine Filtertechnik hoher Qualität erfordert, um den zuverlässigen Betrieb des Dieselmotors zu gewährleisten. Hierzu eingesetzte Dieselfiltersysteme können an einer beliebigen Stelle zwischen dem Kraftstofftank und dem Dieselmotor angeordnet werden. Dabei wird durch die Qualität des Kraftstoffilters die Lebensdauer der Dieseleinspritzanlage weitgehend beeinflußt.

Dieselkraftstoffilter sind in verschiedenen Bauformen bekannt. Beispielsweise besteht das eigentliche Filterelement üblicherweise aus hochwertigem, imprägniertem Spezialfeinstfilterpapier, in selteneren Fällen aus Filz.

Das Dieselfiltersystem dient zunächst der Beseitigung von Wasser im Kraftstoff, um einem Maschinenschaden vorzubeugen und zerstörerische Säurebildung zu vermeiden. Darüber hinaus werden feste Partikel, wie etwa Oxide, Schmutz- und Staubpartikel aus dem Kraftstoff herausgefiltert.

Bei Kälte ist die Anwendung einer Filterheizung notwendig, um den Paraffinanteil im Dieselkraftstoff zu verflüssigen. Hierdurch werden die Schmiereigenschaften des Kraftstoffes erhöht und der Kaltstart von Dieselmotoren erleichtert. Zudem werden Wachs- und Gelbildungsprozesse gehemmt und die Lebensdauer des Kraftstoffilters erhöht.

Es sind zahlreiche Heizeinrichtungen für Dieselkraftstoffe entwickelt worden, die PTC-Heizelemente verwenden. Solche Heizelemente weisen kaltleitende Thermistoren auf, die einen positiven Temperaturkoeffizienten (PTC: Positive Temperature Coefficient) besitzen. PTC-Widerstände werden üblicherweise aus ferroelektrischem Keramikhalbleitermaterial in Stäbchen-, Scheiben- oder Perlenform auf der Basis von Bariumtitanat und Metalloxiden bzw. -salzen gefertigt, Aufgrund des innerhalb eines bestimmten Temperaturintervalls vorliegenden positiven Temperaturkoeffizienten sind Kaltleiter insbesondere für Temperaturregelungen geeignet.

Eine Heizeinrichtung für Dieselkraftstoff unter Verwendung von PTC-Elementen ist beispielsweise aus der EP 0 162 939 B1 bekannt. Diese Heizeinrichtung ist in einem Kraftstofffilter integriert, der aus einem Gehäuse besteht, in das eine Filterpatrone in ein abnehmbares Unterteil eingesetzt ist. Die PTC-Elemente sind mit einem Mittelloch ausgebildet und werden zusammen mit Kontaktplatten an Haltestiften des Gehäuses positioniert und fixiert. Eine solche Heizeinrichtung setzt folglich eine spezifisch konstruierte Anordnung im Kraftstofffilter voraus.

DE 43 09 099 A beschreibt einen Düsenstock mit Ölvorwärmung für Ölbrenner von Heizkesseln. Der Düsenstock besteht aus einem Rohr, dessen vorderes Ende an eine Düse anschließt und dessen hinteres Ende mit einer Ölförderpumpe verbunden ist. Das Rohr besteht aus Metall. Im Inneren des Rohres ist ein PTC-Widerstand vorgesehen, wobei zwei Anschlussdrähte an den Längsenden des Widerstandskörpers den PTC-Widerstand mit einer Spannungsquelle verbinden. Im Bereich um den PTC-Widerstand herum ist der Raum zwischen diesem und der Innenwand des Rohres mit einer porösen Material gefüllt. Dieses poröse Material weist eine gute Leiteigenschaft auf und kann durch Wärmekontakt mit der Oberfläche des PTC-Widerstandes auf dessen Temperatur gehalten werden. Entsprechend einer Ausführungsform können in einer Bohrung in Längsrichtung hintereinander zwei PTC-Widerstände angeordnet werden. Die Kontaktierung der PTC-Widerstände, die elektrisch parallel geschaltet sind, erfolgt über die ihren Kontaktflächen anliegenden Halbkörper. Die Halbkörper sind durch selbstschneidende Schrauben mit den Anschlussdrähten verbünden. Auch der Raum zwischen den PTC-Widerständen und der Innenwand des Rohres ist mit porösem Material ausgefüllt. Diese Anordnung ist in einem Kunststoffrohr angeordnet.

Der Erfindung liegt die Aufgabe zugrunde, eine Heizeinrichtung für Dieselkraftstoff anzugeben, welche billiger ist und leichter produziert werden kann. Femer liegt der Erfindung die Aufgabe zugrunde, ein Dieselfiltersystem mit einer solchen Heizeinrichtung bereitzustellen.

Diese Aufgabe wird durch die Gegenstände der unabhängigen Patentansprüche gelöst.

Insbesondere wird durch das Merkmal, dass der Wärmeleitkörper rohrförmig ausgestaltet ist, eine definierte axiale Durchströmung des Kraftstoffes erreicht, wodurch eine sehr hohe Wärmeübertragung von dem PTC-Heizelement auf den Dieselkraftstoff stattfindet. Hierdurch werden große Durchflussmengen bei kompakter Bauart ermöglicht.

Aufgrund der definierten Kraftstäffführung ist die erfindungsgemäße Heizeinrichtung besonders für sehr große Durchflussmengen geeignet und daher in vorteilhafter Weise bei Lastkraftwagen und großen Notstromaggregaten anwendbar.

Durch die rohrförmige Ausformung des Wärmeleitkörpers ist für den Einbau der erfindungsgemäßen Heizeinrichtung lediglich eine solche Öffnung erforderlich, die in vorteilhafter Weise beispielsweise mittels einer Bohrung herstellbar ist. Die Heizeinrichtung ist somit. ohne großen Konstruktionsaufwand in verschiedene Dieselfiltersysteme integrierbar. Dabei lässt sich die Heizeinrichtung in einfacher Weise mittels eines O-Ringes abdichten.

Aufgrund der einfachen Bauform ist die erfindungsgemäße Heizeinrichtung in vorteilhafter Weise besonders gut als Nachrüstsystem verwendbar.

Bevorzugte Ausgestaltungen der Erfindung sind in den Unteransprüchen definiert.

Ist der Wärmeleitkörper durch zwei parallel angeordnete rohrförmige Teile ausgestaltet, so wird dadurch die Kraftstofführung weiter verbessert. Befindet sich dabei das PTC-Heizelement zwischen beiden Teilen des Wärmeleitkörpers, so wird in vorteilhafter Weise die Wärmeübertragung weiter verbessert, was eine größere Durchflußmenge bei einer kompakteren Bauform ermöglicht.

Wird der Wärmeleitkörper aus Blechen geformt, so hat dies den Vorteil, daß die Herstellungskosten verringert werden.

Der Wärmeleitkörper kann in vorteilhafter Weise auch eine durchbrochene Außenwandung aufweisen, wodurch zusätzlich zur axialen Kraftstoffdurchströmung eine Querströmung ermöglicht wird, die die Wärmeübertragung auf den Dieselkraftstoff weiter verbessert und so die Durchflußmenge erhöht.

Werden das PTC-Heizelement und der Wärmeleitkörper in ein stabförmiges Heizungsgehäuse gefaßt, so wird in vorteilhafter Weise die mechanische Stabilität der Heizeinrichtung erhöht.

Die Bildung dieses Heizungsgehäuses aus Kunststoff birgt den Vorteil einer Gewichtsverringerung in sich.

Das Heizungsgehäuse ist ferner in vorteilhafter Weise mit einem Gehäusesockel versehen, wodurch eine einfache An- und Abmontage der erfindungsgemäßen Heizeinrichtung ermöglicht wird.

Ist in das Gehäuse ein Temperaturschalter integriert, so wird in vorteilhafter Weise ein autark funktionierendes System geschaffen, das sich selbständig ein- und ausschaltet.

Schließlich ist es vorteilhaft, das PTC-Heizelement aus einer Vielzahl von Thermistoren zu bilden, wodurch Bauteilschwankungen ausgeglichen werden und die Zuverlässigkeit der erfindungsgemäßen Heizeinrichtung erhöht wird.

Die Erfindung wird nachfolgend unter Bezugnahme auf die beigefügten Figuren näher erläutert. Im einzelnen zeigen die Figuren:
Fig. 1 eine erste bevorzugte Ausführungsform der erfindungsgemäßen Heizeinrichtung;
Fig. 2 den Heizkörper der ersten Ausführungsform;
Fig. 3 das Heizungsgehäuse der ersten Ausführungsform;
Fig. 4 ein Anschlußgehäuse zum Einsetzen der Heizeinrichtung der ersten Ausführungsform;
Fig. 5 eine Heizeinrichtung gemäß einer zweiten Ausführungsform der Erfindung;
Fig. 6 den Heizkörper gemäß der zweiten Ausführungsform der Erfindung; und
Fig. 7 das Heizungsgehäuse der zweiten Ausführungsform der Erfindung.

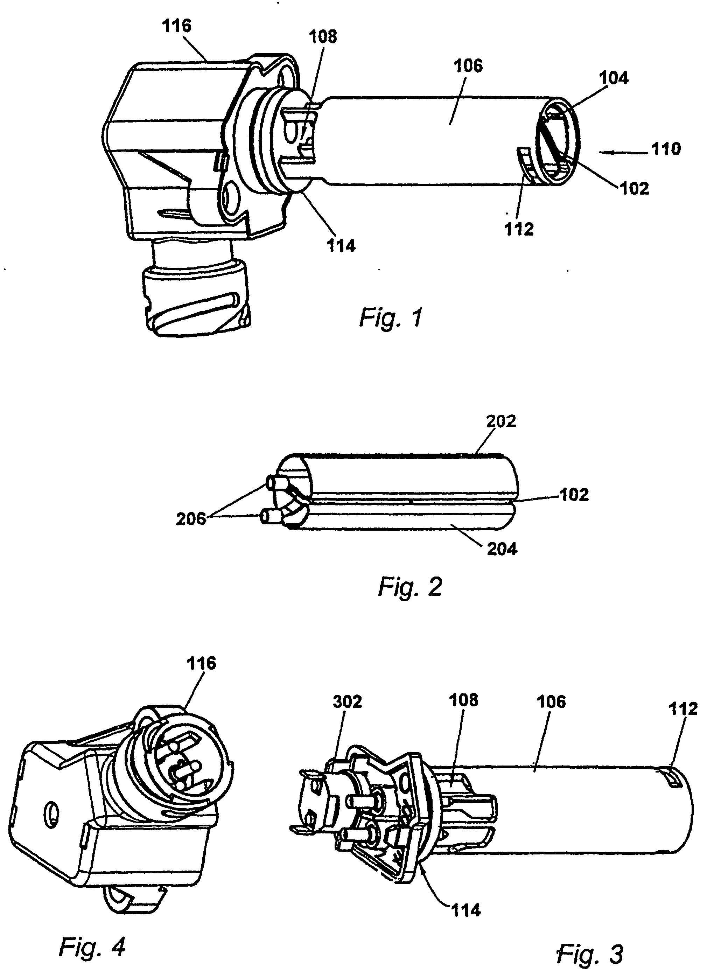

In der Fig. 1 ist eine erste bevorzugte Ausgestaltung der Erfindung dargestellt. Ein stabförmiges Heizungsgehäuse 106 umschließt das PTC-Heizelement 102 und den Wärmeleitkörper 104. Das Heizungsgehäuse 106 verfügt über einen Gehäusesockel 114, der in ein Anschlußgehäuse 116 eingesetzt ist. Der Dieselkraftstoff tritt durch die Öffnung 108 in die Heizeinrichtung ein, durchläuft die rohrförmige Anordnung der Heizeinrichtung und verläßt die Anordnung durch die Öffnung 110.

Mittels dieser axialen Durchströmung wird eine sehr kompakte Bauweise ermöglicht. Beispielsweise beträgt der Durchmesser des Heizungsgehäuse 106 vorzugsweise 20 mm. Die Einbaulänge der Heizungseinrichtung beträgt vorzugsweise 80 mm. Das Anschlußgehäuse 116 kann ebenfalls kompakt ausgeführt werden.

Fig. 2 stellt den Heizkörper gemäß der vorliegenden Ausgestaltung der Erfindung näher dar. Wie gezeigt wird, ist das PTC-Heizelement 102 beidseitig von rohrförmig gebogenen Wärmeleitblechen 202, 204 umschlossen. Die Verbindung zwischen dem PTC-Heizelement und den Wärmeleitblechen erfolgt vorzugsweise durch Klebung, kann jedoch auch durch Klemmverbindungen, Nieten, Schrauben oder durch jede andere Verbindungstechnik wie etwa Löten oder Schweißen erfolgen.

Die Formung der Wärmeleitbleche 202, 204 erfolgt vorzugsweise durch Biegung oder Falzung. Es können jedoch auch anderweitig geformte oder gepreßte Wärmeleitkörper verwendet werden.

Das PTC-Heizelement 102 ist elektrisch vorzugsweise an Steckverbinder 206 angeschlossen, die auf geeignete Gegenkontakte am Gehäusesockel 114 aufgesetzt werden können.

Figur 3 zeigt ein bevorzugtes Heizungsgehäuse der vorliegenden Ausgestaltung der Erfindung. Das Heizungsgehäuse 106 verfügt sockelseitig über Öffnungen 108 zum Kraftstoffeintritt sowie endseitig über eine entsprechende Öffnung 110 zum Kraftstoffaustritt. Das Heizungsgehäuse 106 ist an dem in Fig. 2 dargestellten Heizkörper vorzugsweise mittels Rastausnehmungen 112 positioniert und fixiert.

Das Heizungsgehäuse 106 besteht aus Kunststoff, vorzugsweise aus Polyethylen. Der aus den Wärmeleitblechen 202, 204 gebildete Wärmeleitkörper 104 besteht in dem dargestellten Ausführungsbeispiel aus Aluminium bzw. einer Aluminiumlegierung, die eine relativ geringe Wärmekapazität aufweisen und einen ausgezeichneten Wärmeleitwert besitzen.

In Fig. 3 ist ferner ein Temperaturschalter 302 gezeigt, der in den Gehäusesockel 114 integriert ist. Mittels des Temperaturschalters 302 läßt sich die Heizeinrichtung temperaturabhängig ein- und ausschalten.

In Fig. 4 ist ein Anschlußgehäuse zur Aufnahme der Heizeinrichtung gemäß der ersten bevorzugten Ausgestaltung der Erfindung gezeigt. Das Anschlußgehäuse 116 weist elektrische Steckverbinder auf, um eine Stromzufuhr für sowohl das PTC-Heizelement als auch den Temperaturschalter zu ermöglichen.

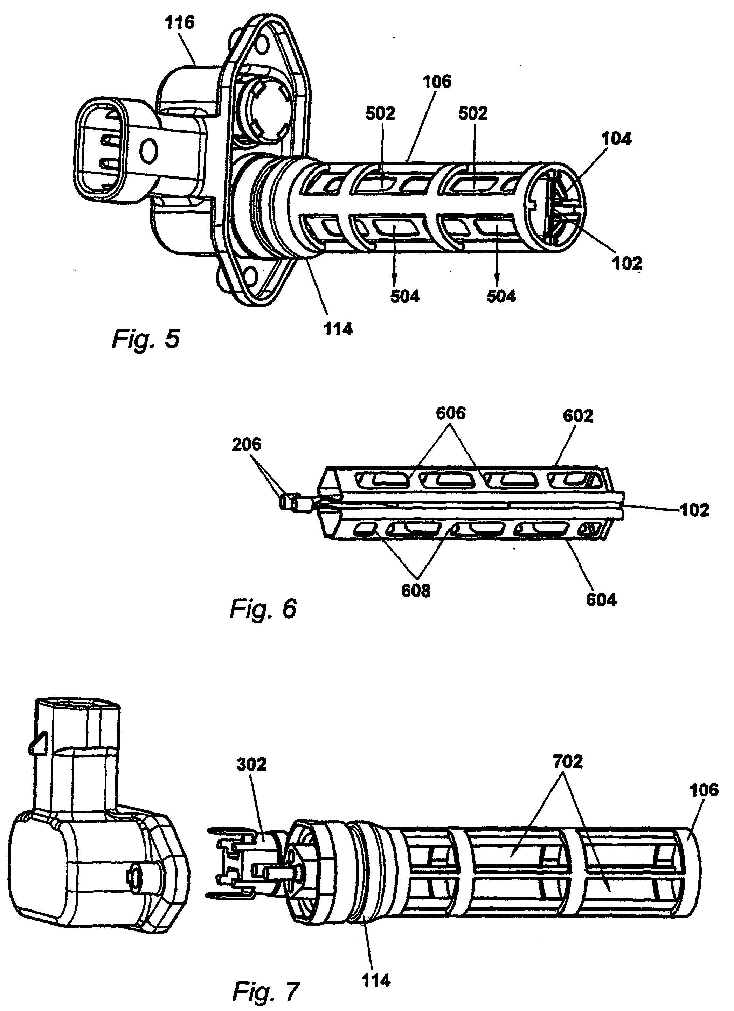

Ein zweites Ausführungsbeispiel der Erfindung ist in Fig. 5 dargestellt. Diese Ausgestaltung unterscheidet sich von der Anordnung der Fig. 1 bis 4 hauptsächlich in der Ausführung der Wärmeleitbleche und des Heizungsgehäuses.

Fig. 6 zeigt den Heizkörper der zweiten Ausgestaltung der Erfindung. In dieser Ausführungsform weisen die Wärmeleitbleche 602, 604 Öffnungen 606, 608 auf, die zusätzlich zu oder anstelle der axialen Kraftstoffdurchströmung eine seitliche Kraftstofführung in Querrichtung ermöglicht. Wie in Fig. 6 gezeigt, befinden sich die Öffnungen 606, 608 vorzugsweise in schräg verlaufenden Mantelflächen der Wärmeleitbleche 602, 604. Die Öffnungen können jedoch auch an anderen Stellen vorliegen, beispielsweise in den Giebelflächen der Wärmeleitbleche. Ferner können Öffnungen in jenen Flächen der Wärmeleitbleche 602, 604 sowie im PTC-Heizelement 102 vorgesehen sein, die zueinander in direktem mechanischem und thermischem Kontakt stehen, so daß eine Kraftstofführung vom Innenraum eines Wärmeleitteilkörpers in den anderen erfolgen kann.

In Fig. 7 ist das Heizungsgehäuse der zweiten Ausgestaltung dargestellt, das ebenfalls Öffnungen in der Mantelfläche aufweist. Diese Öffnungen dienen ebenfalls einer durch seitliche Durchströmung erweiterten Kraftstofführung.

## Patentansprüche

1. Heizeinrichtung für Dieselkraftstoff, umfassend:
ein PTC-Heizelement (102) und
ein mit dem PTC-Heizelement in thermischem Kontakt stehender Wärmeleitkörper (104),
**dadurch gekennzeichnet, dass**
der Wärmeleitkörper (104) zwei parallel nebeneinander angeordnete rohrförmige Teile (202, 204, 602, 604) umfasst, zwischen denen das PTC-Heizelement (102) gelegen ist und die so angeordnet sind, dass sie im Betrieb von dem Dieselkraftstoff durchflossen werden, wobei die zwei parallel nebeneinander angeordneten rohrförmigen Teile aus Wärmeleitblech geformt sind.

2. Heizeinrichtung nach Anspruch 1, **dadurch gekennzeichnet, dass** der Wärmeleitkörper eine Außenwandung mit Öffnungen (606, 608) aufweist.

3. Heizeinrichtung nach einem der Ansprüche 1 oder 2, **dadurch gekennzeichnet, dass** das PTC-Heizelement (102) und der Wärmeleitkörper (104) von einem stabförmigen Heizungsgehäuse (106) umschlossen sind.

4. Heizeinrichtung nach Anspruch 3, **dadurch gekennzeichnet, dass** das Heizungsgehäuse aus Kunststoff gebildet ist.

5. Heizeinrichtung nach Anspruch 3 oder 4, **dadurch gekennzeichnet, dass** das Heizungsgehäuse einen Durchmesser von etwa 20 mm aufweist.

6. Heizeinrichtung nach einem der Ansprüche 3 bis 5, **dadurch gekennzeichnet, dass** das Heizungsgehäuse eine Länge von etwa 80 mm aufweist.

7. Heizeinrichtung nach einem der Ansprüche 3 bis 6, **dadurch gekennzeichnet, dass** das Heizungsgehäuse einen Gehäusesockel (114) aufweist.

8. Heizeinrichtung nach Anspruch7, **dadurch gekennzeichnet, dass** der Gehäusesockel einen Temperaturschalter (302) aufweist.

9. Heizeinrichtung nach Anspruch 7 oder 8, **dadurch gekennzeichnet, dass** der Gehäusesockel mit elektrischen Steckverbindern (206) verbunden ist, die mit dem PTC-Heizelement (102) verbunden sind.

10. Heizeinrichtung nach einem der Ansprüche 7 bis 9, **dadurch gekennzeichnet, dass** der Gehäusesockel so ausgestaltet ist, dass er in ein Anschtussgehäuse (116) einsetzbar ist.

11. Heizeinrichtung nach einem der Ansprüche 3 bis 10, **dadurch gekennzeichnet, dass** das Heizungsgehäuse (106) eine Mantelfläche mit Öffnungen (702) aufweist.

12. Heizeinrichtung nach einem der Ansprüche 1 bis 11, **dadurch gekennzeichnet, dass** das PTC-Heizelement (102) aus einer Vielzahl von Thermistoren besteht.

13. Dieselfiltersystem enthaltend eine Heizeinrichtung nach einem der Ansprüche 1 bis 12.

## Claims

1. Heating device for diesel oil, comprising:
a PTC heating element (102) and
a heat conductor (104) being in thermal contact with the PTC heating element,
**characterized in that**
the heat conductor (104) comprises two tubular parts (202, 204, 602, 604) arranged in parallel side by side, between which the PTC heating element (102) is positioned and which are arranged such that diesel oil flows therethrough during operation, the two tubular parts arranged in parallel side by side being formed of a heat conducting sheet.

2. Heating device according to claim 1, **characterized in that** the heat conductor comprises an outer wall having openings (606, 608).

3. Heating device according to one of claims 1 or 2, **characterized in that** the PTC heating element (102) and the heat conductor (104) are surrounded by a rod-shaped heater housing (106).

4. Heating device according to claim 3, **characterized in that** the heater housing is made of plastics.

5. Heating device according to claim 3 or 4, **characterized in that** the heater housing has a diameter of about 20 mm.

6. Heating device according to one of claims 3 to 5, **characterized in that** the heater housing has a length of about 80 mm.

7. Heating device according to one of claims 3 to 6, **characterized in that** the heater housing comprises a housing base part (114).

8. Heating device according to claim 7, **characterized in that** the housing base part comprises a temperature switch (302).

9. Heating device according to claim 7 or 8, **characterized in that** the housing base part is connected to electrical plug-in connectors (206) being connected to the PTC heating element (102).

10. Heating device according to one of claims 7 to 9, **characterized in that** the housing base part is formed such that it is insertable into a connecting housing (116).

11. Heating device according to one of claims 3 to 10, **characterized in that** the heater housing (106) comprises a side surface having openings (702).

12. Heating device according to one of claims 1 to 11, **characterized in that** the PTC heating element (102) comprises a plurality of thermistors.

13. Diesel filter system comprising a heating device according to one of claims 1 to 12.

## Revendications

1. Dispositif de chauffage pour gazole, comprenant :
un élément de chauffage PTC (102) et
un corps conducteur de chaleur (104) se trouvant en contact thermique avec l'élément de chauffage PTC, **caractérisé en ce que** le corps conducteur de chaleur (104) comprend deux pièces en forme de tuyaux agencées parallèlement l'une à côté de l'autre (202, 204, 602, 604), entre lesquelles est placé l'élément de chauffage PTC (102) et qui sont disposées de telle manière qu'elles sont traversées en cours de fonctionnement par le gazole, les deux pièces en forme de tuyaux disposées parallèlement l'une à côté de l'autre étant moulées à partir d'une tôle conductrice de chaleur.

2. Dispositif de chauffage selon la revendication 1, **caractérisé en ce que** le corps conducteur de chaleur présente une paroi extérieure avec des ouvertures (606, 608).

3. Dispositif de chauffage selon l'une des revendications 1 ou 2, **caractérisé en ce que** l'élément de chauffage PTC (102) et le corps conducteur de chaleur (104) sont entourés par un boîtier de chauffage (106) en forme de tige.

4. Dispositif de chauffage selon la revendication 3, **caractérisé en ce que** le boîtier de chauffage est en matière plastique.

5. Dispositif de chauffage selon la revendication 3 ou 4, **caractérisé en ce que** le boîtier de chauffage présente un diamètre d'environ 20 mm.

6. Dispositif de chauffage selon l'une des revendications 3 à 5, **caractérisé en ce que** le boîtier de chauffage a une longueur d'environ 80 mm.

7. Dispositif de chauffage selon l'une des revendications 3 à 6, **caractérisé en ce que** le boîtier de chauffage est équipé d'un socle de boîtier (114).

8. Dispositif de chauffage selon la revendications 7, **caractérisé en ce que** le socle du boîtier est équipé d'un contact thermique (302).

9. Dispositif de chauffage selon la revendication 7 ou 8, **caractérisé en ce que** le socle du boîtier est relié à des connecteurs électriques (206) qui sont reliés à l'élément de chauffage PTC (102).

10. Dispositif de chauffage selon l'une des revendications 7 à 9, **caractérisé en ce que** le socle du boîtier est disposé de telle manière qu'il peut être inséré dans un boîtier de raccordement (116).

11. Dispositif de chauffage selon l'une des revendications 3 à 10, **caractérisé en ce que** le boîtier de chauffage (106) présente une surface latérale avec des ouvertures (702).

12. Dispositif de chauffage selon l'une des revendications 1 à 11, **caractérisé en ce que** l'élément de chauffage PTC (102) se compose d'un grand nombre de thermistances.

13. Système de filtrage de gazole contenant un dispositif de chauffage selon l'une des revendications 1 à 12.
